Europäisches Patentamt

(19) European Patent Office

Office européen des brevets

(11) Publication number: **0 120 539**
A1

(12) **EUROPEAN PATENT APPLICATION**

(21) Application number: 84200405.3

(22) Date of filing: 21.03.84

(51) Int. Cl.³: **G 11 B 7/24**

(30) Priority: 28.03.83 NL 8301072

(43) Date of publication of application:
03.10.84 Bulletin 84/40

(84) Designated Contracting States:
DE FR GB IT NL SE

(71) Applicant: N.V. Philips' Gloeilampenfabrieken
Groenewoudseweg 1
NL-5621 BA Eindhoven(NL)

(72) Inventor: Jacobs, Bernardus Antonius J.
c/o INT. OCTROOIBUREAU B.V. Prof. Holstlaan 6
NL-5656 AA Eindhoven(NL)

(72) Inventor: Rippens, Wilhelmus Gertrudes V. M.
c/o INT. OCTROOIBUREAU B.V. Prof. Holstlaan 6
NL-5656 AA Eindhoven(NL)

(72) Inventor: de Poorter, Adriaan Wilhelmus
c/o INT. OCTROOIBUREAU B.V. Prof. Holstlaan 6
NL-5656 AA Eindhoven(NL)

(72) Inventor: Vriens, Leendert
c/o INT. OCTROOIBUREAU B.V. Prof. Holstlaan 6
NL-5656 AA Eindhoven(NL)

(74) Representative: Weening, Cornelis et al,
INTERNATIONAAL OCTROOIBUREAU B.V. Prof.
Holstlaan 6
NL-5656 AA Eindhoven(NL)

(54) Optical recording disc.

㋡ Optically readable information disc having a glass sub-
strate plate (1) and a recording layer (3) in which on the side of
the recording layer the surface of the substrate plate is pro-
vided with a transparent layer (2) of a material which impedes
the diffusion of Na and/or K from the substrate plate to the
recording layer or in which the said surface is provided with a
transparent layer of a cross-linked synthetic resin on which
the layer of the diffusion-impeding material is provided.

EP 0 120 539 A1

**FIG.1**

"Optical recording disc".

The invention relates to an optical recording disc having a glass substrate plate which a one side has a recording layer in which optically readable information bits can be formed by exposure to pulsated laser light which is focused on the recording layer via the substrate plate.

Such a recording disc is disclosed, for example, in published Netherlands Patent Application No. 80 05 693 (PHN 9861) in the name of Applicants.

In this known recording disc a tellurium alloy is used as a recording material. As a result of the exposure to pulsated laser light holes or recesses are formed at the exposed places. These information bits can be read by means of laser light. The diametrical dimensions of the information bits are small and are, for example, from 0.3 - 3 $\mu$m.

The recording material has a good stability and a good sensitivity to laser light.

It is the object of the present invention to provide an optical recording disc in which the stability of the recording layer is further improved.

This object is achieved by means of an optical recording disc of the type mentioned in the opening paragraph which is characterized in that a transparent layer of a material which impedes the diffusion of Na and/or K from the substrate plate to the recording layer is provided directly in the surface of the substrate on the side of the recording layer, in which transparent layer no information bits are formed, or that the surface of the substrate plate is first provided with a transparent layer of a cross-linked synthetic resin and the above layer of a material which impedes the diffusion of Na and/or K is provided hereon.

From this characteristic feature it appears that the invention is based on the recognition gained by Applicants that the diffusion of sodium ions and/or potassium ions from the substrate plate to the recording layer reduces the stability of the recording layer.

The sensitivity of the recording layer also decreases and the quality of the recorded information bits or information bits still to be recorded is reduced. Due to the above-mentioned diffusion the signal-to-noise ratio is also adversely influenced. In Applicants' opinion the influence of the sodium ions and/or potassium ions on the stability of the recording layer may have various causes. Firstly, said ions may serve as a catalyst in the degradation, for example, by oxidation or hydrolysis, of the material of the recording layer. Secondly, the anions, usually OH-ions, dragged along with the sodium ions or potassium ions, may produce an intensified hydrolysis, oxidation or decomposition of the recording material. Hence a degradation caused by NaOH or KOH. Thirdly, there may be the formation of stable compounds by reaction of Na and/or K with constituents from the recording layer, which compounds have low light-sensitivities. An example thereof is the formation of $Na_2Te$, $Na_2Se$, $K_2Te$ and $K_2Se$ compounds in a recording material which comprises a tellurium-selenium alloy.

Of course the signalled degradation phenomena are stronger when the glass substrate plate has a higher content of Na and/or K. A glass substrate plate is frequently used in optical recording discs. A glass substrate plate as compared with a substrate plate of a synthetic resin presents the advantages of an excellent non-deformability, resistance to scratches, temperature resistance and moisture resistance. In contrast with a synthetic resin, glass does not pass moisture. This phenomenon can easily be demonstrated by means of a closed bottle of synthetic resin filled with a liquid, for example milk. In the course of time the liquid level will fall in contrast to that of a liquid-filled glass bottle.

A glass substrate plate is usually chosen in particular due to the fact that glass does not pass or absorb moisture. It is striking to establish that just with a glass substrate plate, a comparatively considerable transport of NaOH and/or KOH takes place from the glass to the recording layer.

Materials which prevent or impede the transport of Na-ions or K-ions are known as such. For example, a liquid crystal indicator is known from Japanese Patent Application No. 16815 (Kokai No. 54-103795) which comprises two glass plates and a liquid crystal composition provided between the plates. The plates are coated on the inside with a layer of $SiO_2$ or silicon nitride by which the transport of Na from the glass to the liquid crystal composition is prevented and consequently no white spots are formed as a result of the reaction of Na with a component of the liquid crystal composition.

Examples of readily useful materials which impede or inhibit the diffusion of Na and/or K are $Al_2O_3$, $SiO_2$, SiO, $GeO_2$, $Y_2O_3$, $ZrO_2$, $WO_3$, $MoO_3$, $Sb_2O_3$, $In_2O_3$, ZnO, $ZnO_2$, MgO, $CeO_2$, $SnO_2$, $TiO_2$, $CaF_2$, TiC, $Si_3N_4$, $CeF_3$, TiN, $ThF_3$, $BiF_3$ and $MgF_2$.

In a preferred form of the recording disc in accordance with the invention, a transparent layer is used which is manufactured from an inorganic oxide, nitride or fluoride.

Dependent on the layer thickness, the above materials are sufficiently transparent to allow the recording layer to be exposed _via_ the substrate plate. In the case of borides, nitrides and carbides, the layer thickness must generally be smaller than or equal to 20 nm. However, there are exceptions, for example, $Si_3N_4$, which may be used in a thicker layer. In the case of fluorides and oxides, a considerably thicker layer may be used which has a maximum thickness, for example, from 100 to 300 nm, depending on the type of oxide or fluoride.

In a further preferred form of the recording disc in accordance with the invention, the transparent diffusion-impeding or diffusion-inhibiting layer is manufactured from a nitride or oxide of titanium or silicon, an oxide of aluminium, yttrium or germanium or from calcium fluoride.

The diffusion-impeding or diffusion-inhibiting layers are provided in the usual manner, for example, by means of a vapour deposition process, a sputtering process, a CVD (chemical vapour deposition) process or a liquid deposition process. An example of the last-mentioned process is the manufacture of a layer of $Y_2O_3$. For this purpose the substrate plate is provided with a solution of yttrium acetylacetonate in an ether. The ether is evaporated and the substrate plate is heated at approximately $550^\circ C$, $Y_2O_3$ being formed.

A variety of recording materials may be used in the recording layer of the recording disc in accordance with the invention, for example, dyes, polymers, metals, chalcogenides and magneto-optical materials, for example ferrites. It will be evident that the invention offers particular advantages by making it possible to use recording materials which are otherwise attractive except that they are degraded by NaOH ir KOH, for example due to decomposition, oxidation or hydrolysis. The advantages according to the invention occur in particular when chalocogenides are used, in particular when tellurium is used or alloys of tellurium with, for example, Se, Sb, As, S, O, Bi, Sn and Ge. Examples hereof are $Te_{60}Se_{25}Sb_{10}S_5$, $Te_{75}Se_{15}Sb_5S_5$, $Te_{83}Se_{12}Sb_3S_2$, $Te_{81}Ge_{15}As_4$ and $Te_{62}Ge_{19}As_{19}$.

In the recording disc according to the invention the substrate plate may first be provided with a transparent layer of a cross-linked synthetic resin on which the transparent diffusion-impeding layer is provided. In this embodiment the laser light energy required to form an information bit is reduced.

The synthetic resin is, for example, a light-crosslinked acrylate synthetic resin. Preferably an optically readable guide track is provided in the synthetic resin layer. The guide track has the form, for example, of a groove which can be followed by the laser light upon

0120539
10-1-1984

recording or reading information. The groove may comprise recessed portions which form an optically readable information track, sometimes termed heading. The heading comprises, for example, information for the control of the recording laser light beam.

A further preferred embodiment of the recording disc according to the invention is characterized in that the surface of the substrate plate is first provided with the transparent diffusion-impeding layer, a transparent layer of a cross-linked synthetic resin is provided hereon in which an optically readable guide track is present and a recording layer is provided on the transparent layer of the cross-linked synthetic resin.

With this preferred embodiment it is achieved that the quality of the guide track is independent of the diffusion-impeding layer and is particular of the thickness of the diffusion-impeding layer.

In the embodiment described hereinbefore, in which the substrate plate is first provided with a layer of a cross-linked synthetic resin in which a guide track may be present, and the diffusion-impeding layer is provided hereon, there is some relation between the guide track and the diffusion-impeding layer. For example, the thickness of the diffusion-impeding layer may not be too large and may be, for example, at most 50-100 nm because otherwise the guide track is masked and the laser light can no longer follow said track.

The invention will now be described in greater detail with reference to the following  embodiment and the drawing, in which

Fig. 1 is a cross-sectional view of a recording disc according to the invention,

Fig. 2 is a tangential sectional view of a preferred embodiment of a recording disc,.

Fig. 3 is a tangential sectional view of another embodiment of a recording disc in accordance with the invention and

Figures 4 and 5 are graphs.

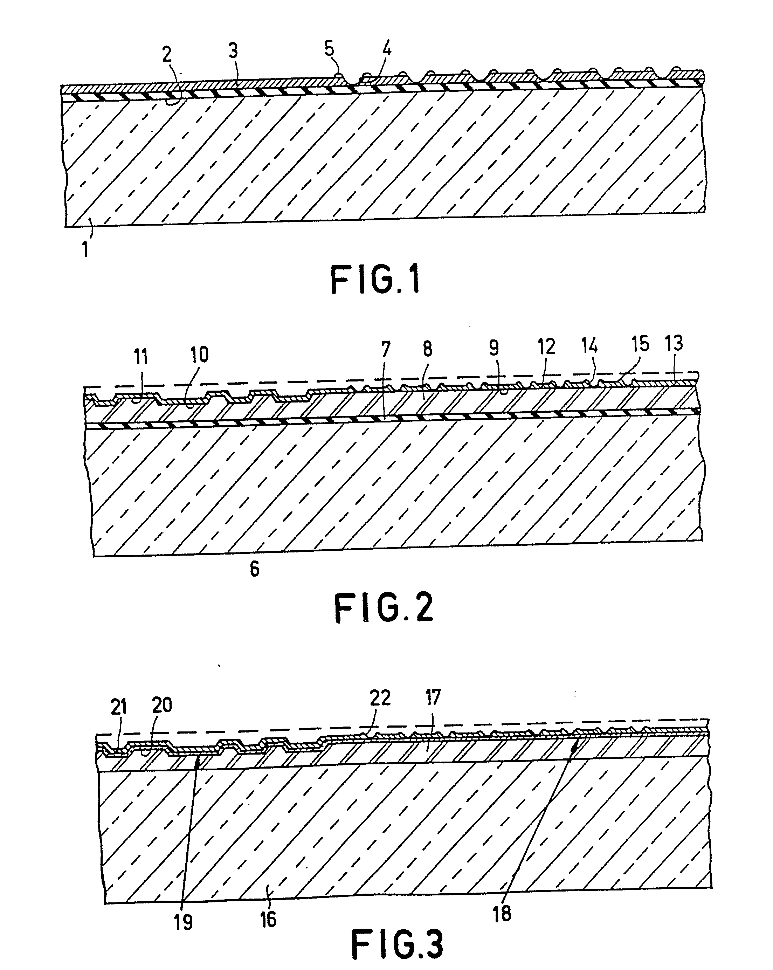

Reference numeral 1 in Fig. 1 denotes a glass substrate plate having a thickness of 1.2 mm and a diameter of 30 cm. The substrate plate is coated on one side with a layer 2 of a material which has been specified hereinbefore and which impedes or inhibits the diffusion of Na and Kfrom the substrate plate 1. A layer 3 of a chalcogenide recording material having the composition $Te_{75}Se_{15}Sb_5S_5$ is provided on the layer 2.

Information bits 4 are formed in the recording layer 3 by exposure to pulsated laser light (power of the laser 10 mW, pulse time $5 \times 10^{-9}$ sec) which is focused on the recording layer 3 via the substrate plate 1 and the layer 2. The bits have the form of a recess or hole having a thickened edge portion 5. The dimensions of the bits are small. The area of the bits is in the order of magnitude of 1 $\mu m^2$. At the area of the bits the reflection of the recording layer is reduced and the transmission is increased. The bits can be read optically in reflection or in transmission.

Fig. 2 shows a preferred form of a recording disc in accordance with the invention. The recording disc comprises a substrate plate of glass which is referenced 6 and which has on one side a layer 7 of a material which impedes or inhibits the diffusion of Na and K from the substrate plate 6. A layer 8 of a cross-linked acrylate synthetic resin obtained by light-curing a liquid monomer composition is provided on the layer 7, The monomer composition comprises the following ingredients:

10 % by weight of trimethylolpropane triacrylate
57 % by weight of tripropylene glycoldiacrylate
29 % by weight of N-vinylpyrrolidone
 4 % by weight of initiator (benzil dimethyl ketal).

The layer of synthetic resin 8 comprises an optically readable guide track in the form of a groove 9 which locally has recessed portions 10. The recessed portions 10 together with intermediate portions 11 constitute an optically readable structure which, for example, comprises information for the control of the laser light beam upon recording. The surface of the disc is indicated by broken line 12. A recording layer 13 of the same composition as used in the Fig. 1 disc is provided on the synthetic resin layer 8. The optical structure 10, 11 is exposed to weak laser light, no information bits being formed in the layer 13. The laser light is focused on the optical structure 10, 11 via the substrate plate 6. The structure is read in reflection on the basis of phase differences. The reading laser light follows the groove also on the basis of phase differences.

When information is recorded, pulsated energy-intensive laser light is used the intensity of which is, for example, a factor of 10 higher than that of the reading laser light. The laser light beam is pulsated in accordance with the information to be recorded. As a result of the exposure, information bits which have the form of a recess or hole having a thickened edge portion 15 are formed in the recording layer 13. The bits are preferably provided in the portions of the recording layer present above the groove.

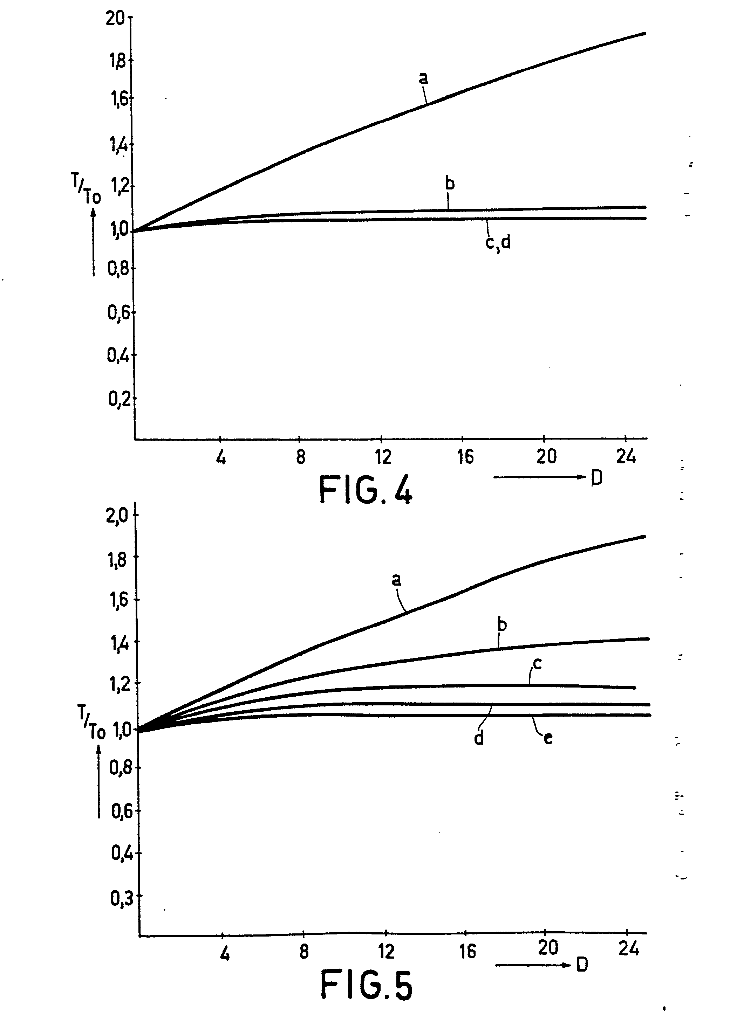

Reference numeral 16 in Figure 3 denotes a glass substrate plate which on one side has a transparent layer 17 of a light-cured acrylate synthetic resin. An optically readable guide track 18 which comprises a heading 19 is provided in the surface of layer 17. Guide track and heading are analogous to those of Figure 2. The surface of layer 17 is coated with a transparent layer 20 of TiN having a thickness of 10 nm. A recording layer 21 of the composition $Te_{75} Se_{15} Sb_5 S'_5$ is provided hereon. The heating 19 is read in reflection via the substrate plate 16 (against the recording layer), the weak laser light following track 18.

Upon recording information, energy-intensive laser light is used which is pulsated in accordance with the date to be recorded and which is focused on the recording layer 21 via substrate plate 16. Information bits are formed in the exposed places. The bits are read in reflection by means of weak laser light.

The discs according to the invention have been subjected to an ageing test, the so-called climate test. According to the climate test the recording layer is subjected per 24 hours  at a relative humidity of $93 \pm 3\%$ to the following temperature cycle: storing at $25^{\circ}C$ for 12 hours, heating from $25^{\circ}C$ to $65^{\circ}C$ over a period of 2 hours, storing at $65^{\circ}C$ for 2 hours, cooling from $65^{\circ}C$ to $25^{\circ}C$ over a period of 2 hours, heating from $25^{\circ}C$ to $65^{\circ}C$ over a period of 2 hours, storing at $65^{\circ}C$ for 2 hours, and cooling from $65^{\circ}C$ to $25^{\circ}C$ over a period of 2 hours.

After the climate test the transmission (T) of the recording layer was determined and compared with the transmission prior to the climate test (To). The increase of the transmission T is a measure of the degradation of the recording layer as a result of the oxidation to transparent tellurium oxides.

In the graphs of Figs. 4 and 5 the number of days of the climate test is plotted on the horizontal and the ratio T/To is plotted on the vertical.

In Fig. 4 the lines indicated by letters refer to:

a)  substrate plate of glass, without diffusion-impeding layer,

b)  substrate plate of glass with 10 nm thick layer of TiN,

c)  substrate plate of glass having a 100 nm thick layer of $Si_3N_4$,

d)  substrate plate of glass having a 200 nm thick layer of $Si_3N_4$.

In Fig. 5 the lines indicated by letters refer to:

a)  substrate plate of glass without diffusion-impeding layer,

b)  substrate plate of glass having a 20 nm thick layer of $Y_2O_3$,

c)  substrate plate of glass having a 40 nm thick layer of $Y_2O_3$,

d)  substrate plate of glass having a 60 nm thick layer of $Y_2O_3$,

e)  substrate plate of glass having a 80 nm thick layer of $Y_2O_3$.

Analytical investigations by means of ESCA (Electron Spectroscopy for Chemical Analysis) and RBS (Rutherford Back Scattering) after the climate test have furthermore demonstrated that the recording layers provided on glass substrates not having a diffusion-impeding layer comprise Na up  to a maximum concentration of 20 at.% and comprise K up to a maximum concentration of 15 at. %. When a diffusion-impeding or diffusion inhibiting layer of a sufficient thickness is used, no Na and/or K could be demonstrated in the recording layer.

1.　　　　Optical recording disc having a glass substrate plate which on one side has a recording layer in which optically readable information bits can be formed by exposure to pulsated laser light which is focused on the recording layer via the substrate plate, characterized in that a transparent layer of a material which impedes the diffusion of Na and/or K from the substrate plate to the recording layer is provided directly on the surface of the substrate on the side of the recording layer, in which transparent layer no information bits are formed, or that the surface of the substrate plate is first provided with a transparent layer of a cross-linked synthetic resin and the above layer of a material which impedes the diffusion of Na and/or K is provided hereon.

2.　　　　An optical recording disc as claimed in Claim 1, characterized in that a transparent, diffusion-impeding or diffusion-inhibiting layer is used manufactured from an inorganic oxide, nitride or fluoride.

3.　　　　An optical recording disc as claimed in Claim 2, characterized in that the transparent layer is manufactured from a nitride or oxide of Ti or Si , an oxide of Al, Y or Ge or from calcium fluoride.

4.　　　　An optical recording disc as claimed in Claim 1, characterized in that the recording layer comprises a chalcogenide.

5.　　　　An optical recording disc as claimed in Claim 1, characterized in that the surface of the substrate plate is first provided with the transparent diffusion-impeding layer, a transparent layer of a cross-linked synthetic resin is provided hereon in which an optically readable guide track is present and a recording layer is provided on the transparent layer of the cross-linked synthetic resin.

FIG.1

FIG.2

FIG.3

0120539

FIG. 4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 266 933 (WESTERN ELECTRIC) <br> * Page 2, lines 6-16; page 3, line 29 - page 4, line 7; page 4, line 25 - page 5, line 4; claims; figures 2A,2B * | 1-5 | G 11 B 7/24 |
| X | EP-A-0 062 975 (TOKYO SHIBAURA) <br> * Page 10, lines 1-18; figure 8; claims 1,11 * | 1-4 | |
| Y | EP-A-0 023 809 (XEROX) <br> * Page 3, line 3 - page 4, line 21; figure 1; claims 1,3 * | 1-4 | |
| Y | PATENTS ABSTRACTS OF JAPAN, vol. 6, no. 228, 13th November 1982, page 5M171; & JP - A - 57128 596 (TOKYO SHIBAURA DENKI K.K.) 10-08-1982 <br> * Abstract * | 1,5 | TECHNICAL FIELDS SEARCHED (Int. Cl. ³) <br><br> G 11 B 7/00 |
| Y | PATENTS ABSTRACTS OF JAPAN; vol. 2, no. 88, 19th July 1978, page 3939E78; & JP - A - 53 52104 (FUJI SHASHIN FILM K.K.) 12-05-1978 <br> * Abstract * | 1-4 | |
| Y | PATENTS ABSTRACTS OF JAPAN, vol. 6, no. 204, 15th October 1982, page 53M164; & JP - A - 57 109 696 (FUJITSU K.K.) 08-07-1982 <br> * Abstract * <br> --- -/- | | |

The present search report has been drawn up for all claims

| Place of search THE HAGUE | Date of completion of the search 29-06-1984 | Examiner PHILOSOPH L.P. |
|---|---|---|

European Patent Office

**EUROPEAN SEARCH REPORT**

| DOCUMENTS CONSIDERED TO BE RELEVANT | | | Page 2 | |
|---|---|---|---|---|
| Category | Citation of document with indication. where appropriate, of relevant passages | Relevant to claim | CLASSIFICATION OF THE APPLICATION (Int. Cl. ³) | |
| A | EP-A-0 059 096 (ASAHI KASEI KOGYO)<br>* Page 11, lines 10-25; page 15, line 1 - page 17, line 18 *<br>--- | 2,3 | | |
| A | EP-A-0 045 183 (ASAHI KASEI KOGYO)<br>* Page 7, line 9 - page 8, line 15; page 20, line 5 - page 22, line 7; claims 1,12,13; figure 1 *<br>--- | 2,3 | | |
| A | FR-A-2 418 514 (RCA)<br>---<br>----- | | | |
| | | | TECHNICAL FIELDS SEARCHED (Int. Cl. ³) | |

The present search report has been drawn up for all claims

| Place of search THE HAGUE | Date of completion of the search 29-06-1984 | Examiner PHILOSOPH L.P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82